(19) Europäisches Patentamt
European Patent Office
Office européen des brevets

(11) **EP 1 236 491 A1**

(12) **EUROPEAN PATENT APPLICATION**

(43) Date of publication:
**04.09.2002 Bulletin 2002/36**

(51) Int Cl.⁷: **B01D 29/11**, B01D 29/48, B01D 29/66, B01D 29/70

(21) Application number: **02251214.9**

(22) Date of filing: **22.02.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Smith, Peter Roy**<br>**Bath BA2 5LL (GB)**<br>• **Cross, Edward Henry,**<br>**Bath BA2 5LU (GB)**<br>• **Smith-Haddon, William Frederick**<br>**Gwent NP6 4AX (GB)** |
| (30) Priority: **23.02.2001 GB 0104486** | |
| (71) Applicant: **CROSS MANUFACTURING COMPANY (1938) LIMITED**<br>**Bath BA2 5RR (GB)** | (74) Representative:<br>**Dunlop, Brian Kenneth Charles et al**<br>**c/o Wynne-Jones, Lainé & James**<br>**22 Rodney Road**<br>**Cheltenham Gloucestershire GL50 1JJ (GB)** |

(54) **Filter element**

(57) A spring filter element (8) having a plurality of coils (9,10). The coils are pre-tensioned with the degree of pre-tension varied progressively along the length of the filter such that any part of the filter, in one vertical orientation of the element, supports the dependent remainder of the filter to maintain a closed coil state during normal use. This allows substantially equal opening of the filter gaps between the coils when the element is extended and submerged in fluid (15a).

INSTALLED TOP END

INSTALLED BOTTOM END

*Fig. 2*

EP 1 236 491 A1

**Description**

This invention relates to fluid filter elements of the type which include a spring positionable in the fluid flow path such that the fluid can be forced to pass between the coils of the spring. In the assembled condition, the coils of such springs are held together in a controlled manner such that the filter gap between adjacent coils is of a known small width, typically a few tens of micrometers. The fluid path gap is defined, typically, by regularly spaced projections provided on one side of a rectangular section wire coil.

In a known arrangement the coil is wound to form an open coiled spring and then compressed between end constraints so that the projections on one side of the rectangular section wire coil are in contact with the plain side of the adjacent coil.

It will be understood, in the context of this specification, that the term "fluid" refers to gases, vapours and substantially incompressible liquids.

A back flushing facility is often provided in order to clean out the spaces between the coils. In order to assist in freeing the caked particulate mass which accumulates between the coils of the filter element, provision is made to allow the spring coils to extend by a small amount so that a further small gap is generated between each coil's projections and the plain side of the adjacent coil. During the back flushing operation this small extra gap, in addition to providing an enlarged flow path for the flushing fluid, allows the coils of the spring to vibrate, being stimulated by the hydro-dynamic flow forces, the vibration further assisting in the cleaning operation by freeing particulate matter adhering to the coil profile.

A typical existing design of filter element is described in WO-A-91/02578. Here the spring filter element is wound in the form of an open coiled spring but with the coil to coil pitch varying from one end of the coil stack to the other end. The spring is installed with the coil axis vertical and the longest coil to coil pitches situated at the lower end. If the spring stack is now compressed to its slightly extended length in the back flushing mode and the coil to coil pitch variation has been correctly chosen then each individual coil in the stack will have been distorted axially to such an extent that it will just support the net weight of all the coils above with a coil to coil gap which is substantially constant over the stack length.

Whilst the design disclosed in WO-A-91/02578 produces a satisfactory installed filter element the open coil pitches of varying length produce an uncompressed filter element which is, typically, five or seven times the compressed length and is difficult to handle and store without damage to the coils. A further problem can arise because the relatively high ratio of free length to coil diameter will, in most cases, cause the spring to go beyond the ratio value when buckling of the coil stack occurs. This means that extra axial location of the coils, in addition to the end locations will be needed in most cases.

This invention consists in a spring filter element having a plurality of coils along its length, the coils bearing projections for engaging adjacent coils to define a minimum filter gap between the coils characterised in that the coils are pre-tensioned with the degree of pre-tension varied progressively along the length of the filter such that any part of the filter, in one vertical orientation of the element, supports the dependent remainder of the filter to maintain a closed coil state during normal use and to allow substantially equal opening of the filter gaps between the coils when the element is extended and submerged in the fluid.

The coils are normally pre-tensioned by a winding operation. The pre-tension may be varied continuously or in a stepped fashion. The latter case is acceptable provided the axial vibration set up during the back flushing operations is still able to cause the plurality of coils to separate from the adjacent coils.

Preferably the variable coil to coil tension force is such that, when the stack is placed in a vertical position and a force is applied to open the coil stack to its back flushing length, the tension force produced by any individual active coil in the stack will be just sufficient to support the effective or net weight of all the remaining coils in the stack which are below the said individual active coil and produce a deflection which is substantially equal to the difference between the closed coil length of the stack and the extended for back flushing length of the stack divided by the number of active coils in the stack. This deflection will therefore equal the amount by which the controlled coil to coil gap has increased at the start of a back flushing operation. The term "active coil" is used in this context to differentiate from the one, two or three end coils which may be located on the end fixtures and therefore unable to deflect under load. Reference is made to the effective or net weight, because when the filter is immersed in fluid, the fluid will to an extent support the spring. Thus with a stainless steel coil immersed in water the weight that needs to be supported may be reduced by about 12%.

In addition to the aforementioned problems of handling and installing the existing open coil spring element, the close coil spring filter element design exhibits further advantages in manufacture which will result in a more economic solution to the problem of precision filtration.

Firstly, it has been found that a heat treatment operation is necessary in the manufacture of open coils in order to prevent subsequent distortion of the coils after removal from the winding mandrels. In contrast with the more stable form of the close coiled element it has been found that, with the majority of metal alloys used in the manufacture of filter elements, the heat treatment operation is not required.

Secondly, with the existing open coil, variable pitch design of spring filter element, the variable pitch winding mandrel places a constraint on the diameter and length of the installed filter element. The use of this bespoke tooling makes minor changes to element size required to take account of installed coil to coil gaps and variable material properties of the filter element difficult and expensive to accommodate in a production organisation. It has been found considerably easier to deal with these minor physical changes to the filter element sizes when the manufacturing process has been set up for the production of close coiled spring filter elements.

A further manufacturing difficulty can arise in effecting the sudden change in coil pitch required at the lower end of the open coiled, variable pitch stack. This is because it is necessary to have two or three non-active, close pitched coils at each end of the stack to form a locating seating or abutment when the filter element is installed in its housing. In the new design all the coils apart from the end coils or, if desired, a group of non-active coils, are pre-tensioned to each other so there is no need to make special arrangements for seating the end coils apart from ensuring that the end coil or coils in the vertically orientated stack is/are secured axially to the top and bottom abutments.

The existing open coiled, variable pitch spring element requires an additional spring means to hold the stack in its close coiled state as well as guidance means to prevent the coil stack from buckling. In the new design of pre-tensioned close coiled element the separate spring means may not be required and axial guidance of the coil stack may only be required in certain installations where hydrodynamic forces or mechanical vibration of the plant is liable to set up sympathetic radial vibrations in the coil stack.

From another aspect the invention consists in a spring filter element in which the coils forming the element can be extended by a defined amount the natural state of the element is in the form of a close coiled spring with the individual coils so formed to provide an initial tension force between coils characterised in that the initial tension force between adjacent coils varies from one end of the coil stack to the other end, the variable coil to coil tension being such that with the coil stack located in a fluid in one vertical position and extended by the said defined amount the tension force produced by any individual active coil in the stack is just sufficient to support the effective weight of the remaining coils in the stack which are below the said individual coil and produce a deflection which is equal to the difference between the close coiled length of the stack and the said defined extended length of the stack divided by the number of active coils in the stack.

The improvements which are the subject of this invention will now be described, by way of example, with reference to a specific embodiment which is shown in the accompanying drawings in which:-

Figure 1 shows a typical, variable pitch, prior art open coil spring filter element in its free extended state;

Figure 2 shows an example of a new design of pre-tensioned close coiled spring filter element with an illustration of the unstressed shape which a single coil would take up if removed from near the installed top end of the stack and, for comparison, a corresponding shape of a single unstressed coil if removed from near the installed bottom end of the stack;

Figure 3 shows a section through the element of Figure 2 with the bottom end fitted into a filter housing and the upper end provided with a sealing cap which contacts an upper region of the filter housing when the spring filter element extends during a back flushing operation;

Figure 4 shows a filter configured to generate the force required to extend the filter element to its back flushing length.

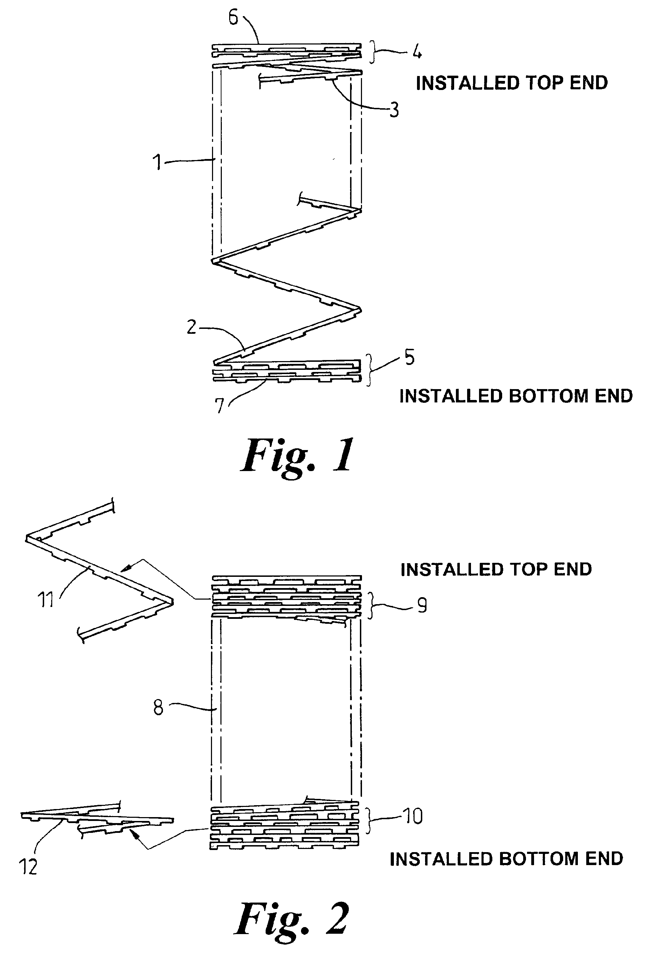

Referring to Figure 1, the prior art filter element 1 is formed from wire 2 wound into a coil spring shape, the wire being typically of rectangular section with the shorter sides of the rectangular section being parallel to the spring axis. On one long side of the wire section are formed equally spaced projections 3, which define the gap between adjacent coils when the spring is fully compressed. For the purpose of drawing clarity, the height of the projections 3 above the wire section has been shown exaggerated: in practice this height will be chosen within the range ten to four hundred micrometres depending on the degree of filtration required.

At each end of the stack can be, typically, two or three close coiled turns 4 and 5 of the wire which are used to provide a location and seating region. Some or all of the projections may be removed from these end regions of the coil stack. The remaining length of the spring is wound with the coil to coil pitch varying, the pitch being smallest at the end 6 and steadily increasing to the largest coil to coil pitch at the end 7. When the filter element is installed with its axis vertical, the end 7 is positioned at the lower end so that the largest pitch coil is supporting the remaining coils in the stack.

Provided that the pitch starting amplitude and the pitch variation are correctly chosen when the coil stack is installed vertically and is allowed to extend from its fully compressed length by the small amount needed for a back flushing operation, each coil in the stack will take up a position at a substantially constant pitch from the adjacent coils.

Referring to Figure 2, one example of the new design of pre-tensioned close pitch spring filter element 8 is shown in its natural state with all individual coils in close contact with each other. The pre-tensioned force, however, is varied during the winding operation such that the active coils 9 adjacent to the installed top end of the filter element have the greatest pre-tensioned force because these coils have to support the effective or net weight of all the remaining active coils below during a back flushing operation.

The pre-tensioned force on each coil is successively reduced until the installed bottom end coils 10 are reached where the force is a minimum. In order to illustrate the variation in the coil pre-tensioned force employed when winding the stack Figure 2 also shows the helical shapes 11 and 12 which an active coil cut out from the corresponding positions 9 and 10 in the stack will take up when the pre-tensioned forces are released.

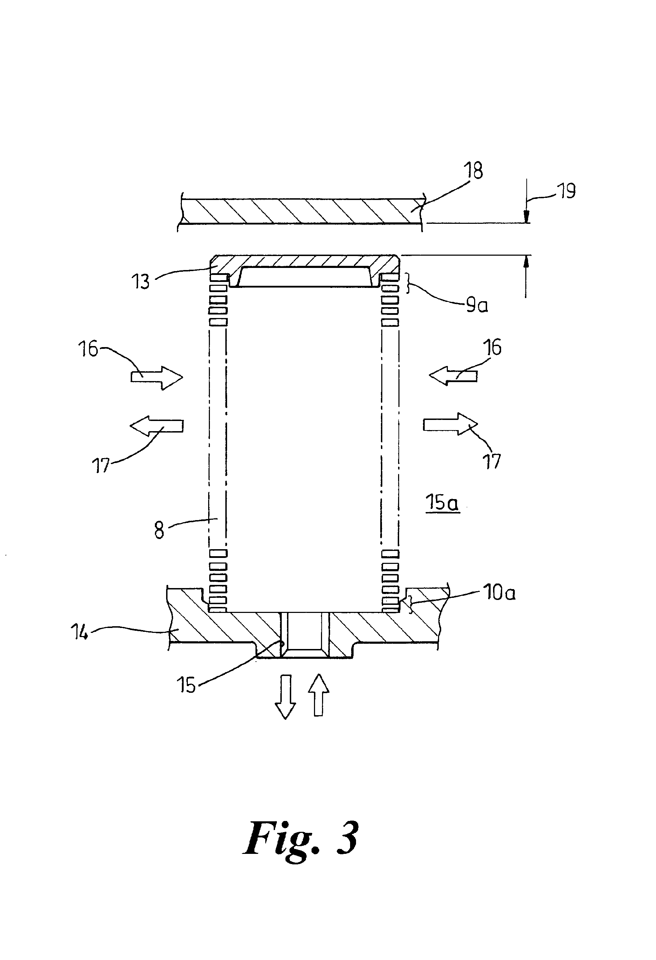

The new design of pre-tensioned close pitch spring filter element is shown installed in a filter housing in Figure 3. The one or two upper coils 9a in the stack are anchored into a cap 13 which seals off the top end of the spring stack. Similarly, the one or two lowest coils 10a in the stack are anchored into the filter housing 14 which also contains the fluid port 15.

During a normal filtering operation the fluid 15a flows from the outside of the filter element, through the coil gaps and into the central space of the coil stack in direction of arrows 16 and leaves the housing via the exit port 15. The fluid flow is reversed during a back flushing operation - the flushing fluid now entering port 15 and passing through the coil gaps in the reverse direction, leaving the filter element in directions 17.

During the back flushing operation the flow through the coil gaps generates a small back pressure which acts on the area contained by the cap 13 attached to the upper end of the filter element 8. The upward force so generated is sufficient to overcome the combined effective or net weight of the coil stack plus the pre-tensioned forces in the coils causing the spring to extend until the cap 13 contacts the stop means 18 attached to the filter housing. The amount 19 that the filter element extends, when divided by the number of active coils in the spring stack, will be equal to the amount by which each coil has moved axially relative to the adjacent coils. This axial displacement may be adjusted by moving the stop means 18 in order, for a given number of turns, to accommodate different sizes of filtration gaps which can vary, typically, within the range ten to four hundred micrometres.

Because the coils are no longer in contact with each other they are now free to vibrate under the action of the hydrodynamic forces set up by the back flushing fluid. This vibration of the coils combined with the increased coil gaps further assists the cleaning process.

In certain cases, particularly when dealing with low density fluids such as gases, the back pressure generated by the reverse flow of gas through the coil gaps may be insufficient to extend the filter element. In these circumstances the extension of the stack may be accomplished by mechanical or pneumatic/hydraulic means, in the latter case by designing the cap 13 as a piston operating in a cylinder formed in the top of the filter housing 14.

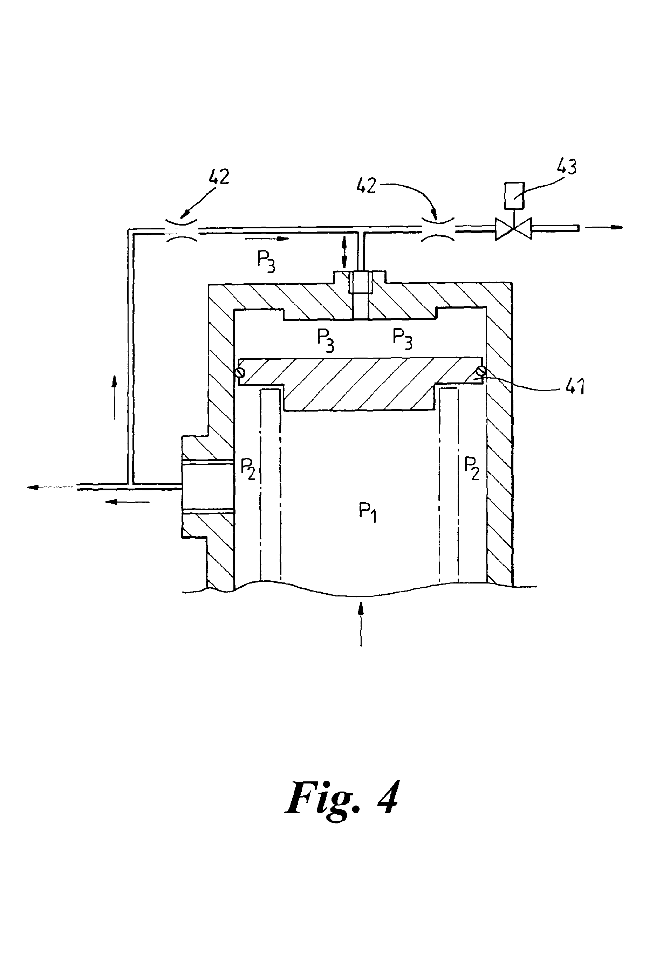

Figure 4 shows one method of achieving the back flush when the restricted flow through the coils does not produce a sufficient pressure drop ($P_1 - P_2$) to overcome the weight of the cap 18, etc. In this case, the space above the cap is sealed off from the space below by a piston 41. Separate restrictions 42 and a solenoid operated stop valve 43 can be used in the arrangement shown to pull down the upper space pressure to a value below the exit pressure $P_2$ during a back flushing operation. This reduced pressure is denoted by $P_3$. The net upward force can then be calculated as:

($P_1$ acting on the area inside the coil) + ($P_2$ acting on

the annular area between the coil and cylinder

diameter) - ($P_3$ acting on the full cylinder area)

In an alternative embodiment, a pressure-reducing valve can be used to pull down the upper space pressure instead of the restrictions 42.

Thus it can be seen that the close coiled filter element spring provides an alternative improved solution to the provision of filter elements where a cleaning operation employing back flushing through the filter element is required. The close coiled filter element spring assembly consisting of the spring and end cap can further be used in a filter housing installed vertically where the extended length of the spring required for the back flushing operation is required to produce an extended coil stack where the additional coil to coil gaps generated by the extension are substantially equal along the length of the filter element therefore allowing the coils to vibrate in response to the hydrodynamic forces set up by the fluid passing through the coil gaps.

It will be particularly noted that in many applications it will be possible to have springs in which all coils are active. Further as the springs are more stable to transverse forces cageless configurations are possible in certain applications. It will be understood that in this art the term "cage" refers to the guiding surfaces, typically in the form of thin bars, which have to be added to the inside or outside of the coil stack in order to constrain the stack so that individual coils can only move in an axial direction. The word "cageless" is used to describe an installation where the guide bars are absent. Additionally, the pre-tensioning may allow the tension spring, which is obligatory in the Figure 1 configuration, to be dispensed with.

**Claims**

1. A spring filter element (8) having a plurality of coils (9,10) along its length, the coils bearing projections (3) for engaging adjacent coils to define a minimum filter gap between the coils **characterised in that** the coils are pre-tensioned with the degree of pre-tension varied progressively along the length of the filter such that any part of the filter, in one vertical orientation of the element, supports the dependent remainder of the filter to maintain a closed coil state during normal use and to allow substantially equal opening of the filter gaps between the coils when the element is extended.

2. A filter element as claimed in Claim 1 wherein the pre-tension is varied continuously.

3. A filter element as claimed in Claim 1 wherein the pre-tension is varied in a stepped fashion.

4. A filter element as claimed in any one of the preceding claims **characterised in that** all the coils (9,10) are active.

5. A spring filter element (8) in which the coils (9,10) forming the element can be extended by a defined amount, the natural state of the element is in the form of a close coiled spring with the individual coils so formed to provide an initial tension force between coils **characterised in that** the initial tension force between adjacent coils varies from one end (9a) of the coil stack to the other end (10a), the variable coil to coil tension being such that with the coil stack located in a fluid (15a) in one vertical position and extended by the said defined amount the tension force produced by any individual active coil in the stack is just sufficient to support the effective or net weight of the remaining coils in the stack which are below the said individual coil and produce a deflection which is equal to the difference between the close coiled length of the stack and the said defined extended length of the stack divided by the number of active coils in the stack.

6. A spring filter element as claimed in any one of the preceding claims further including a substantial closure (13) extending across the filter element (8) at/ or adjacent one end thereof responsive to backwash flow conditions for extending the filter element.

7. A spring filter element as claimed in claim 6, wherein the filter is within a housing (14) and the closure (13) is constituted as a piston (41).

8. A spring filter element as claimed in claim 7, further including means (42) for reducing the pressure on the side of the piston remote from the filter element.

9. A filter assembly including a filter element as claimed in Claims 1 to 8 **characterised in that** the filter element (8) provides at least sufficient tension to maintain the minimum filter gaps during filtering flow.

10. A filter assembly as claimed in Claim 9 **characterised in that** the filter element (8) is cageless.

11. A filter assembly including a cageless filter element as claimed in any one of Claims 1 to 6.

**Fig. 1**

INSTALLED TOP END

INSTALLED BOTTOM END

INSTALLED TOP END

INSTALLED BOTTOM END

**Fig. 2**

**Fig. 3**

**Fig. 4**

**European Patent Office**

## EUROPEAN SEARCH REPORT

Application Number

EP 02 25 1214

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 93 07944 A (PATENTS PENDING LIMITED) 29 April 1993 (1993-04-29) | 1-6,9-11 | B01D29/11 B01D29/48 B01D29/66 B01D29/70 |
| Y | * page 2, line 3 - line 32; figures 1-5 * | 7,8 | |
| Y | GB 2 136 307 A (MONMOUTH DESIGNS LTD) 26 September 1984 (1984-09-26) * page 2, line 98 - line 126; figure 2 * | 7,8 | |
| A | DE 91 03 090 U (FM FILTERMASCHINENBAU) 9 April 1992 (1992-04-09) * page 2, line 27 - line 13; figures 1-3 * | | |
| A | EP 0 213 941 A (PARKMAN GROUP SERVIC LTD) 11 March 1987 (1987-03-11) * figures 1-8 * | | |

**TECHNICAL FIELDS SEARCHED (Int.Cl.7)**

B01D

The present search report has been drawn up for all claims

| Place of search | Date of completion of the search | Examiner |
|---|---|---|
| MUNICH | 26 April 2002 | Sembritzki, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 25 1214

This annex lists the patent family members relating to the patent documents cited in the above—mentioned European search report.
The members are as contained in the European Patent Office EDP file on
The European Patent Office is in no way liable for these particulars which are merely given for the purpose of information.

26-04-2002

| Patent document cited in search report | | Publication date | Patent family member(s) | | Publication date |
|---|---|---|---|---|---|
| WO 9307944 | A | 29-04-1993 | AU<br>WO | 2785592 A<br>9307944 A2 | 21-05-1993<br>29-04-1993 |
| GB 2136307 | A | 26-09-1984 | NONE | | |
| DE 9103090 | U | 09-04-1992 | DE | 9103090 U1 | 09-04-1992 |
| EP 0213941 | A | 11-03-1987 | EP<br>GB<br>JP<br>US | 0213941 A2<br>2180033 A ,B<br>62117609 A<br>4746105 A | 11-03-1987<br>18-03-1987<br>29-05-1987<br>24-05-1988 |

EPO FORM P0459

For more details about this annex : see Official Journal of the European Patent Office, No. 12/82